# EUROPÄISCHE PATENTSCHRIFT

(11) **EP 0 538 779 B1**
(45) Veröffentlichungstag und Bekanntmachung des Hinweises auf die Patenterteilung: **31.07.1996**
(21) Anmeldenummer: 92117898.4
(22) Anmeldetag: 20.10.1992
(51) Int. Cl.: G01D 5/26

(54) **Langgestrecktes Zugelement**
Elongated tendon
Traction allongé

(30) Priorität: 22.10.1991 DE 4134787
(43) Veröffentlichungstag der Anmeldung: 28.04.1993
(73) Patentinhaber: VOEST-ALPINE AUSTRIA DRAHT GmbH, 8600 Bruck a.d. Mur (AT)
(72) Erfinder: Lessing, Rainer, Dr.rer.nat., W-5063 Immekeppel-Overath (DE); Miesseler. Hans-Joachim, Dipl.-Ing., W-5000 Köln 90 (DE); Wolff, Reinhard, Dr.-Ing., W-5000 Köln 91 (DE); Götz, Kurt, Ing., A-8600 Bruck an der Mur (AT); Kocsisek, Wolfgang, Dipl.-Ing., A-1030 Wien (AT)
(74) Vertreter: Hennicke, Albrecht, Dipl.-Ing.

(56) Entgegenhaltungen:
- DE-A- 4 011 440
- GB-A- 2 148 489
- US-A- 4 950 043
- PATENT ABSTRACTS OF JAPAN vol. 13, no. 215 (P-874) 19. Mai 1989 & JP-A-10 32 132

## Beschreibung

Die Erfindung betrifft ein langgestrecktes Zugelement aus Metall, insbesondere Stab, Stabbündel, Litze oder Seil aus Stahl.

Langgestreckte Zugelemente aus Metall, die einerseits hohe Zugkräfte aufzunehmen haben und andererseits der Korrosion unterliegen, müssen auf ihre Funktionsfähigkeit hin überwacht werden, um ein Versagen rechtzeitig zu erkennen, das sich durch übermäßige Dehnung oder Risse im Zugelement ankündigt. Insbesondere ein Versagen der Bewehrungseinlagen in Stahlbeton- oder Spannbetonbauwerken kann zu katastrophalen Folgen führen, da der Einsturz einer Brücke oder eines Daches viele Menschen gefährden kann.

Um Längenänderungen von Zugelementen aus Metall festzustellen, werden Dehnungsmeßstreifen verwendet, die auf die Zugelemente aufgeklebt werden und die von ihnen aufgenommenen Längenänderungen in elektrische Größen umsetzen, welche in einem geeigneten Auswertegerät erfaßt und ausgewertet werden. Das Messen von Längenänderungen mit Dehnungsmeßstreifen ist jedoch kompliziert und nicht sehr genau. Es kann auch dort nicht angewendet werden, wo das Zugelement nicht frei zugänglich ist, wie dies in der Regel bei Bewehrungselementen für Stahlbeton- oder Spannbetonbauwerke der Fall ist, wo die Stahlstäbe oder Spannglieder im Beton eingebettet sind. Ferner können Beschädigungen der Meßstreiten beim Einbetten oder Verpressen der Stahlstäbe oder Spannglieder nicht mit Sicherheit vermieden werden.

Es ist ein metallischer und intermetallischer Verbundwerkstoff bekannt (US-A-4 950 043), aus dem Konstruktionsteile von Luftfahrzeugen, insbesondere die Außenhaut von Flugzeugen hergestellt wird. Bei diesem Verbundwerkstoff sind in einer Titan-Matrix Lichtwellenleiter eingebettet, die Umwelteinflüsse und strukturelle Störungen erfassen und anzeigen, denen das Luftfahrzeug ausgesetzt ist. Zwischen dem Faseroptik-Material und der Titan-Matrix ist eine Grenzschicht aus Titan-Aluminit angeordnet, um das optische Fasermaterial vor dem Angriff diffundierender Titan-Moleküle zu schützen.

Es ist auch ein Sensorelement bekannt (DE-A-40 11 440), bei dem ein Lichtwellenleiter mit einem Memory-Metall-Stab oder -Seil verbunden ist. Das Memory-Metall zieht sich bei Erreichen einer bestimmten Temperatur ruckartig zusammen und läßt den Lichtwellenleiter ausknicken, wodurch im Lichtwellenleiter eine erhöhte Dämpfung auftritt, die zu einer Anzeige führt.

Bei Bewehrungseinlagen aus Glasfaserverbundstäben ist es bekannt, bei der Herstellung dieser Bewehrungsstäbe Lichtwellenleitersensoren in die Kunststoffmatrix der Spannstäbe miteinzubetten, die auch vorgespannt werden können. Bei der Herstellung von langgestreckten Zugelementen aus Metall ist das Einfügen von Lichtwellenleitern bisher jedoch nicht möglich.

Aufgabe der Erfindung ist es, die Möglichkeit zu schaffen, langgestreckte Zugelemente aus Metall, insbesondere aus mehreren Stäben oder Drähten bestehende Bewehrungseinlagen für Betontragwerke oder Tragseile verschiedener Art auf einfache Weise ständig und über längere Zeit hinweg so zu überwachen, daß ein Versagen der Zugelemente rechtzeitig erkannt und gegebenenfalls verhindert werden kann.

Diese Aufgabe wird mit der Erfindung durch einen sich über die gesamte Länge des zugelementes erstreckenden Hohlraum gelöst, in dem ein Lichtwellenleitersensor (LWL) angeordnet ist, der fest mit dem Zugelement verbunden ist.

Diese Ausgestaltung hat den Vorteil, daß das Zugelement aus Metall schon vor seinem Einbau mit einem Sensor versehen ist, der in einfacher Weise an eine handelsübliche Auswerteeinheit angeschlossen werden kann und eine kontinuierliche Überwachung des mit dem Lichtwellenleitersensor ausgerüsteten Zugelementes erlaubt. Bei Bewehrungseinlagen für Betontragwerke kann hierbei jede Bewehrungseinlage einzeln überwacht werden, so daß nicht nur die Verringerung der Tragfähigkeit der Gesamtbewehrung festgestellt, sondern auch genau dasjenige Bewehrungselement ermittelt werden kann, das infolge eines Bruchs oder einer Beschädigung einen Riß oder eine über das Normale hinausgehende Dehnung erleidet.

Der Hohlraum im Zugelement kann als randoffener Kanal ausgebildet sein. Besonders zweckmäßig ist es jedoch, wenn der Lichtwellenleitersensor im Inneren eines Rohres angeordnet ist, welches das Zugelement bildet oder Teil dieses Zugelementes ist.

Das Zugelement kann aus mehreren Stäben oder Drähten bestehen, wobei der Hohlraum mit dem Lichtwellenleitersensor nur in einem der Drähte oder Stäbe angeordnet ist. Hierbei kann der Hohlraum mit dem Lichtwellenleitersensor in einem langgestreckten, rohrförmigen Kernstab oder -draht angeordnet sein. Besonders zweckmäßig ist es, wenn dieser rohrförmige Kernstab von einer vorzugsweise zylindrischen Drahtwendel gebildet wird. Hierbei können die Schraubengänge der Wendel dicht aufeinanderliegen, aber auch im axialen Abstand voneinander angeordnet sein. Der Kernstab erlangt hierdurch eine hohe Biegsamkeit und Elastizität, so daß die Empfindlichkeit der Sensoren gesteigert wird. Der Kernstab oder die Kerndrahtwendel wird dann von mindestens einem peripheren Stab oder Draht umgeben. Diese peripheren Stäbe oder Drähte können miteinander verdrillt und nach ihrem Verdrillen gereckt und angelassen sein, damit die auf diese Weise gebildete Litze mit Kern ihre Form beibehält.

Um die Empfindlichkeit des Lichtwellenleitersensors zu steigern, kann dieser aus mehreren, miteinander verseilten Lichtwellenleitern bestehen. Es ist auch zweckmäßig, den Lichtwellenleitersensor punktweise oder auf seiner ganzen Länge durch eine niedrigviskose Masse, beispielsweise einen Kunststoff, mit dem Zugelement zu verbinden. Hierdurch ist es möglich, das Zugelement auf seiner ganzen Länge zu überwachen und den Ort einer Überbeanspruchung, beispielsweise des Auftreten eines Risses oder einer übermäßigen Dehnung überall festzustellen. Ferner kann das Zugelement nach Belieben auf passende Längen geschnitten werden, wobei jeder Abschnitt mit dem auf ihn entfallenden Teil des Lichtwellenleitersensors versehen ist.

In Zugelementen, bei denen der Lichtwellenleitersensor sich im Inneren eines Kerndrahtes oder Kernstabes befindet, der von weiteren Spannstäben umgeben ist, ist der LWL-Sensor besonders gut geschützt und Beschädigungen beim Einbau oder im Betrieb der Zugelemente weitgehend entzogen. Da der Licht wellenleiter erst nach der Herstellung der Zugelemente in deren Hohlraum eingebracht wird, ist eine Beschädigung des Lichtwellenleitersensors in der Zeit zwischen Herstellung und Ingebrauchnahme des Zugelementes nicht möglich.

Um Fehlmessungen des Lichtwellenleitersensors zu vermeiden, wenn das Zugelement teilweise oder zeitweise auf Druck beansprucht wird, kann der Lichtwellenleitersensor in Längsrichtung vorgespannt und am Zugelement verankert sein.

Das Zugelement nach der Erfindung ist besonders vorteilhaft als Tragseil für Seilbahnen oder Hängebrücken zu verwenden, die der Witterung ausgesetzt und schwer zugänglich sind und ständig überwacht werden müssen, um ihre Sicherheit zu gewährleisten.

Weitere Merkmale und Vorteile der Erfindung ergeben sich aus der nachfolgenden Beschreibung und der Zeichnung, in der bevorzugte Ausführungsformen der Erfindung an Beispielen näher erläutert sind. Es zeigt:
- Fig. 1: ein langgestrecktes Zugelement in Form eines zylindrischen Bewehrungsstabes mit LWL-Sensor in einer perspektivischen Teildarstellung,
- Fig. 2: eine andere Ausführungsform des Zugelementes nach der Erfindung in Form einer Litze, ebenfalls in einer perspektivischen Teildarstellung,
- Fig. 3: ein Bündel von unidirektional angeordneten Beton-Spanndrähten aus Stahl, in einer perspektivischen Teildarstellung,
- Fig. 4: ein Zugelement nach der Erfindung in einer vierten Ausführungsform in einer perspektivischen Teildarstellung.

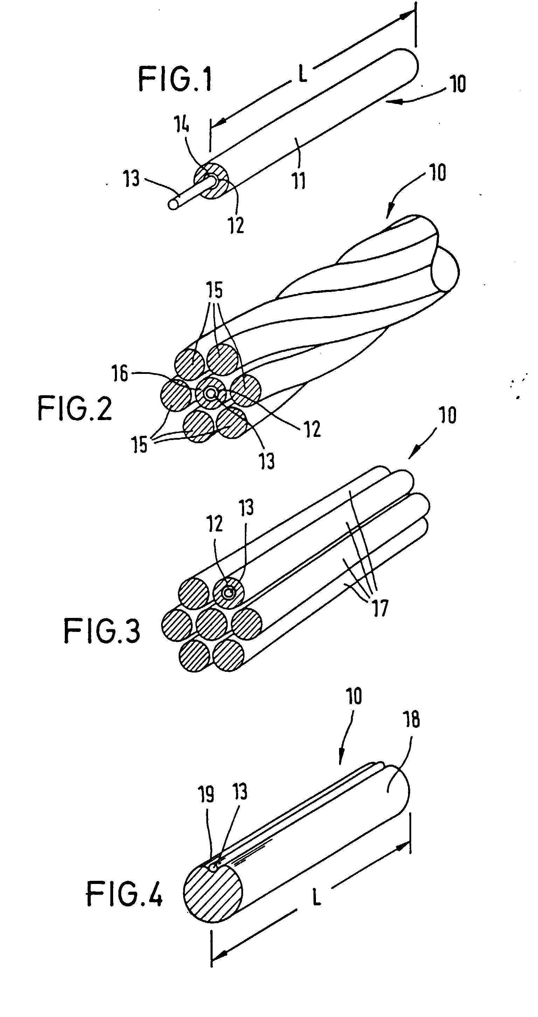

In den Zeichnungen ist mit 10 ein langgestrecktes Zugelement bezeichnet, das bei dem in Fig. 1 dargestellten Ausführungsbeispiel aus einem zylindrischen Rohr 11 aus Stahl besteht. Das zylindrische Rohr kann auch von einer schraubenförmigen Drahtwendel gebildet sein. Das Innere des Rohres11 oder der Spirale bildet einen sich über die gesamte Länge L des Zugelementes erstreckenden Hohlraum 12 von verhältnismäßig kleinem Durchmesser, in dem ein Lichtwellenleitersensor (LWL-Sensor) 13 angeordnet ist. Dieser LWL-Sensor ist ein handelsüblicher Lichtwellenleiter, vorzugsweise vom Gradienten-Index-Typ, der mit einer niedrigviskosen Masse 14, beispielsweise einem geeigneten Kunstharz punktuell oder auf seiner ganzen Länge mit dem Zugelement 10 verbunden, beispielsweise in den Hohlraum 12 eingeklebt ist. Der LWL-Sensor 13 kann auch aus mehreren Lichtwellenleitern bestehen, die miteinander verseilt sind.

Bei der in Fig. 2 dargestellten Ausführungsform besteht das langgestreckte Zugelement 10 aus mehreren peripheren Stäben oder Drähten 15, die im Parallel- oder Kreuzschlag um einen Kernstab oder Kerndraht 16 geschlagen sind. Währen die peripheren Stäbe oder Drähte 15 einen vollzylindrischen oder -ovalen Querschnitt haben, ist der Kernstab oder -draht 16 rohrförmig, d.h., er hat einen auf seiner ganzen Länge durchlaufenden Hohlraum 12, in dem ein LWL-Sensor 13 angeordnet ist. Der Kernstab oder -draht 16 ist nicht verdrillt, sondern im wesentlichen geradlinig. Er kann natürlich auch zusammen mit den peripheren Drähten oder Stäben gebogen werden.

Bei der Ausführungsform nach Fig. 2 ist der LWL-Sensor 13 gegenüber dem rohrförmigen Kernstab 16 vorgespannt und auf seiner ganzen Lange im Inneren 12 des rohrförmigen Stabes 16 verankert. Für bestimmte Anwendungsfälle kann es jedoch auch zweckmäßig sein, den LWL-Sensor nur streckenweise im Kernstab 16 zu verankern, dazwischen aber im Hohlraum 12 längsbeweglich zu führen.

Ein Seil oder eine Litze mit Kerndraht und in diesem angeordneten LWL-Sensor, wie es in Fig. 2 dargestellt ist, eignet sich besonders als Tragseil für Seilbahnen oder als Tragseil für Hängebrükken, wobei natürlich auch mehr als sechs periphere Stäbe oder Drähte vorgesehen sein können. Das Seil oder die Litze kann aber auch als Spannglied für vorgespannte Betontragwerke verwendet werden.

Bei dem in Fig 3 dargestellten Ausführungsbeispiel besteht das Zugelement 10 aus mehreren, unidirektional angeordneten Stäben oder Drähten 17 in Form eines Stabbündels. Einer dieser Stäbe, der auch ein peripherer Stab sein kann, ist rohrförmig ausgebildet, wobei der sich in seiner Längsrichtung erstreckende Hohlraum 12 den LWL-Sensor 13 aufnimmt, der mindestens an seinen beiden Enden fest mit dem Zugelement 10 verbunden ist.

Bei der Ausführungsform nach Fig. 4 besteht das Zugelement 10 aus einem zylindrischen Stab 18, der an seinem äußeren Umfang einen in Längsrichtung durchlaufenden, randoffenen Kanal 19 aufweist, in den ein sich über die gesamte Länge L des Zugelementes 10 erstreckender LWL-Sensor 13 eingeklebt ist. Hierbei kann dieser LWL-Sensor 13 auch in eine niedrigviskose Kunststoffmasse eingebettet sein, welche den Kanal 19 vollständig ausfüllt.

Man erkennt, daß der fest mit dem Zugelement verbundene LWL-Sensor eine ständige Überwachung des hiermit ausgerüsteten Zugelementes erlaubt, wenn er an eine geeignete Überwachungs- und Auswerteeinrichtung bekannter Art angeschlossen wird, die kontinuierlich Licht oder Lichtimpulse durch den LWL-Sensor sendet und wieder empfängt und die Modulationen registriert, die durch Längenänderungen oder Risse im Lichtwellenleiter eintreten, welche die sich im Laufe der Zeit ändernde Beanspruchung der Zugelemente hervorruft.

## Patentansprüche

1. Langgestrecktes Zugelement aus Metall, insbesondere Stab, Stabbündel, Litze oder Seil aus Stahl, **gekennzeichnet durch** einen sich über die gesamte Länge (L) des Zugelementes (10) erstreckenden Hohlraum (12), in dem ein LWL-Sensor (13) angeordnet ist, der fest mit dem Zugelement (10) verbunden ist.

2. Zugelement nach Anspruch 1, **dadurch gekennzeichnet**, daß der Hohlraum (12) als randoffener Kanal (19) ausgebildet ist.

3. Zugelement nach Anspruch 1, **dadurch gekennzeichnet** , daß der Hohlraum (12) das Innere eines Rohres (16) ist.

4. Zugelement nach Anspruch 1 oder 3, **dadurch gekennzeichnet** , daß der Hohlraum von einer Drahtwendel gebildet wird, deren Windungen den Hohlraum umschließen.

5. Zugelement nach Anspruch 4, **dadurch gekennzeichnet**, daß die Windungen der Drahtwendel dicht aufeinanderliegen und einen zylindrischen Hohlraum umschließen.

6. Zugelement nach einem der Ansprüche 1 bis 5, das aus mehreren Stäben (17) oder Drähten besteht, **dadurch gekennzeichnet**, daß der Hohlraum (12) mit dem LWL-Sensor (13) nur in einem der Drähte oder Stäbe (17) angeordnet ist.

7. Zugelement nach einem der Ansprüche 1 bis 6,**gekennzeichnet durch** einen langgestreckten, Kernstab oder -draht (16), in dem ein LWL-Sensor (13) angeordnet ist und der von mindestens einem peripheren Stab (15) oder Draht umgeben wird.

8. Zugelement nach einem der Ansprüche 1 bis 7, **dadurch gekennzeichnet**, daß der LWL-Sensor (13) aus mehreren, miteinander verdrillten Lichtwellenleitern besteht.

9. Zugelement nach einem der Ansprüche 1 bis 8,**dadurch gekennzeichnet** , daß der LWL-Sensor (13) auf seiner ganzen Länge (L) durch eine niedrigviskose Masse (14) mit dem Zugelement (10) verbunden ist.

10. Zugelement nach einem der Ansprüche 1 bis 8, **dadurch gekennzeichnet** , daß der LWL-Sensor (13) über die Länge (L) durch eine niedrigviskose Masse (14) punktuell mit dem Zugelement verbunden ist.

11. Zugelement nach einem der Ansprüche 1 bis 10, **dadurch gekennzeichnet** , daß der LWL-Sensor (13) in Längsrichtung vorgespannt und am Zugelement (10) verankert ist.

12. Verwendung des Zugelementes nach einem der Ansprüche 1 bis 11 als Tragseil für Seilbahnen, Hängebrücken od. dgl.

13. Verwendung des Zugelementes nach einem der Ansprüche 1 bis 11 als Bewehrungselement für Stahlbeton- oder Spannbetontragwerke.

## Claims

1. Elongated tensile element made from metal, in particular a bar, bundle of bars, strand or cable made from steel, characterized by a cavity (12) which extends over the entire length (L) of the tension element (10) and in which there is arranged a fibre-optic sensor (13) which is permanently connected to the tension element (10).

2. Tension element according to Claim I, characterized in that the cavity (12) is constructed as a channel (19) open at the rim.

3. Tension element according to Claim 1, characterized in that the cavity (12) is the interior of a tube (16).

4. Tension element according to Claim 1 or 3, characterized in that the cavity is formed by a wire helix whose turns enclose the cavity.

5. Tension element according to Claim 4, characterized in that the turns of the wire helix bear tightly against one another and enclose a cylindrical cavity.

6. Tension element according to one of Claims 1 to 5, which comprises a plurality of bars (17) or wires, characterized in that the cavity (12) with the fibre-optic sensor (13) is arranged only in one of the wires or bars (17).

7. Tension element according to one of Claims 1 to 6, characterized by an elongated core bar or core wire (16) in which a fibre-optic sensor (13) is arranged and which is surrounded by at least one peripheral bar (15) or wire.

8. Tension element according to one of Claims 1 to 7, characterized in that the fibre-optic sensor (13) comprises a plurality of intertwisted optical fibres.

9. Tension element according to one of Claims 1 to 8, characterized in that the fibre-optic sensor (13) is connected over its entire length (L) to the tension element (10) by a compound (14) of low viscosity.

10. Tension element according to one of Claims 1 to 8, characterized in that the fibre-optic sensor (13) is connected to the tension element in punctiform fashion over the length (L) by a compound (14) of low viscosity.

11. Tension element according to one of Claims 1 to 10, characterized in that the fibre-optic sensor (13) is pretensioned in the longitudinal direction and anchored on the tension element (10).

12. Use of the tension element according to one of Claims 1 to 11 as suspension cable for suspension railways, suspension bridges or the like.

13. Use of the tension element according to one of Claims 1 to 11 as reinforcing element for reinforced-concrete structures or prestressed structures.

## Revendications

1. Elément de traction allongé en métal, en particulier tige, ensemble de tiges, cordon ou câble en acier, caractérisé par un espace creux (12), s'étendant sur toute la longueur (L) de l'élément de traction (10), dans lequel est situé un capteur (13) à fibre optique qui est relié de façon fixe avec l'élément de traction (10).

2. Elément de traction selon la revendication 1, caractérisé en ce que l'espace creux (12) est conformé en canal (19) ouvert sur un bord.

3. Elément de traction selon la revendication 1, caractérisé en ce que l'espace creux (12) est l'intérieur d'un tube (16).

4. Elément de traction selon la revendication 1 ou 3, caractérisé en ce que l'espace creux est formé par une spirale de fil, dont les enroulements entourent l'espace creux.

5. Elément de traction selon la revendication 4, caractérisé en ce que les enroulements de la spirale de fil se superposent de façon jointive et entourent un espace creux cylindrique.

6. Elément de traction selon l'une des revendications 1 à 5, constitué de plusieurs tiges (17) ou fils, caractérisé en ce que l'espace creux (12), avec le capteur à fibre optique (13), ne se trouve que dans l'un des fils ou tiges (17).

7. Elément de traction selon l'une des revendications 1 à 6, caractérisé par une tige ou fil (16) allongé formant âme, dans lequel un capteur à fibre optique (13) est disposé, et qui est entouré par au moins une tige (15) ou fil périphérique.

8. Elément de traction selon l'une des revendications 1 à 7, caractérisé en ce que le capteur à fibre optique (13) est constitué de plusieurs fibres optiques torsadées.

9. Elément de traction selon l'une des revendications 1 à 8, caractérisé en ce que le capteur à fibre optique (13), sur toute sa longueur (L), est relié à l'élément de traction (10) par l'intermédiaire d'une masse (14) de faible viscosité.

10. Elément de traction selon l'une des revendications 1 à 8, caractérisé en ce que le capteur à fibre optique (13), sur la longueur (L), est relié de façon ponctuelle à l'élément de traction par l'intermédiaire d'une masse (14) de faible viscosité.

11. Elément de traction selon l'une des revendications 1 à 10, caractérisé en ce que le capteur à fibre optique (13) est précontraint dans le sens de la longueur et est ancré sur l'élément de traction (10).

12. Utilisation de l'élément de traction selon l'une des revendications 1 à 11 comme câble porteur pour téléphériques, ponts suspendus ou similaires.

13. Utilisation de l'élément de traction selon l'une des revendications 1 à 11 comme élément d'armature pour ouvrages porteurs en béton armé ou en béton précontraint.
